(19) Europäisches Patentamt
European Patent Office
Office européen des brevets

(11) EP 4 704 176 A1

(12) **EUROPEAN PATENT APPLICATION**
published in accordance with Art. 153(4) EPC

(43) Date of publication:
**04.03.2026 Bulletin 2026/10**

(21) Application number: **24796695.5**

(22) Date of filing: **29.03.2024**

(51) International Patent Classification (IPC):
***H01M 4/36*** *(2006.01)* ***C01B 33/113*** *(2006.01)*
***C01F 5/02*** *(2006.01)* ***C01F 7/02*** *(2022.01)*
***C01G 19/02*** *(2006.01)* ***C01G 23/04*** *(2006.01)*
***H01M 4/1391*** *(2010.01)* ***H01M 4/38*** *(2006.01)*
***H01M 4/485*** *(2010.01)* ***H01M 4/62*** *(2006.01)*

(52) Cooperative Patent Classification (CPC):
Y02E 60/10

(86) International application number:
**PCT/JP2024/013127**

(87) International publication number:
**WO 2024/224937 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2023 JP 2023072353**

(71) Applicant: **Panasonic Intellectual Property Management Co., Ltd.**
**Kadoma-shi, Osaka 571-0057 (JP)**

(72) Inventor: **SHIBATA, Sho**
**Kadoma-shi, Osaka 571-0057 (JP)**

(74) Representative: **Novagraaf International SA**
**Chemin de l'Echo 3**
**1213 Onex, Geneva (CH)**

(54) **NEGATIVE ELECTRODE MATERIAL FOR SECONDARY BATTERY, SECONDARY BATTERY, AND METHOD FOR MANUFACTURING NEGATIVE ELECTRODE MATERIAL FOR SECONDARY BATTERY**

(57) A negative electrode material for secondary batteries includes a composite material. The composite material contains an active phase that is reactive with Li, and an amorphous material phase. The active phase is dispersed in the amorphous material phase, and has a particle diameter of 10 nm or less. The amorphous material phase contains elements A, O, and C, and the element A is at least one selected from the group consisting of Si, Sn, Ti, Al, and Mg.

*FIG. 5*

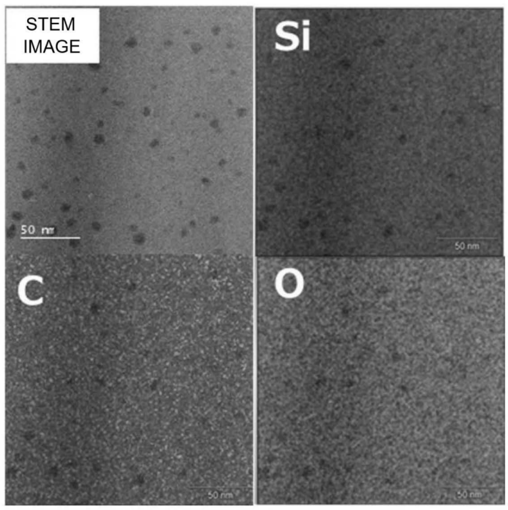


EP 4 704 176 A1

## Description

[Cross Reference to Related Application]

The present disclosure claims priority with respect to the Japanese Patent Application No. 2023-072353 filed on April 26, 2023, and the entire content of the patent application is incorporated herein by reference into the present specification.

[Technical Field]

The present disclosure relates to a negative electrode material for secondary batteries, a secondary battery, and a method for producing a negative electrode material for secondary batteries.

[Background Art]

Nonaqueous electrolyte secondary batteries, especially lithium-ion secondary batteries, because of their high voltage and high energy density, have been expected as promising power sources for small consumer applications, power storage devices, and electric cars. With increasing demand for higher battery energy density, the use of a negative electrode material having high theoretical capacity has been expected.

Patent Literature 1 proposes "a method for producing a porous amorphous material characterized by impregnating a porous resin with one kind or two or more kinds of an organic silicon compound selected from cross-linkable silane and siloxane, to form a cross-linked material of the organic silicon compound within the porous resin, and heating and reacting the cross-linked material in a non-oxidizing gas, at a temperature of 1000 to 1350 °C, to obtain an amorphous material containing silicon, carbon, and oxygen as constituent elements and having oxidation resistance".

Patent Literature 2 proposes "a negative electrode active material for secondary batteries, including a composite material, the composite material containing an active phase that is reactive with Li, and an amorphous material phase, wherein the active phase is dispersed in the amorphous material phase, and the amorphous material phase contains Si, O, and C."

[Citation List]

[Patent Literature]

Patent Literature 1: Japanese Laid-Open Patent Publication No. 2007-115548
Patent Literature 2: International Publication WO2022/210512

[Summary of Invention]

[Technical Problem]

The amorphous material obtained by the production method of Patent Literature 1 has large irreversible capacity. Regarding the negative electrode active material of Patent Literature 2, there is room for improvement in the utilization rate of the active phase.

[Solution to Problem]

One aspect of the present disclosure relates to a negative electrode material for secondary batteries, including: a composite material, the composite material containing an active phase that is reactive with Li, and an amorphous material phase, wherein the active phase is dispersed in the amorphous material phase, and has a particle diameter of 10 nm or less, the amorphous material phase contains elements A, O, and C, and the element A is at least one selected from the group consisting of Si, Sn, Ti, Al, and Mg.

Another aspect of the present disclosure relates to a secondary battery, including: a positive electrode; a negative electrode; and an electrolyte, wherein the negative electrode includes the above-described negative electrode material for secondary batteries.

Still another aspect of the present disclosure relates to a method for producing a negative electrode material for secondary batteries, the method including: a first step of reducing an organometallic compound, to obtain an intermediate

containing an active phase having a median diameter measured by dynamic light scattering spectroscopy of 10 nm or less; and a second step of firing the intermediate, to obtain a composite material containing an amorphous material phase and the active phase dispersed in the amorphous material phase, wherein the organometallic compound and the amorphous material phase contain elements A, O, and C, and the element A is at least one selected from the group consisting of Si, Sn, Ti, Al, and Mg.

[Advantageous Effects of Invention]

According to the present disclosure, it is possible to enhance the utilization rate of the active phase dispersed in the amorphous material phase.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A partially cut-away schematic oblique view of a secondary battery according to one embodiment of the present disclosure.

[FIG. 2] A particle size distribution measured by dynamic light scattering spectroscopy of one example of a nanosilicon (intermediate).

[FIG. 3A] An XRD spectrum of one example of a nanosilicon (intermediate) (median diameter 3 nm or less).

[FIG. 3B] A reference XRD spectrum of a crystalline nanosilicon (median diameter 40 nm).

[FIG. 4] A SEM image of one example of a composite material particle.

[FIG. 5] A cross-sectional STEM-EDX image of one example of a composite material particle.

[FIG. 6] A fast Fourier transform image (FFT image) of a cross-sectional STEM image of one example of a composite material particle.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. For the components other than those characteristic of the present disclosure, any known components of secondary batteries may be adopted. In the present specification, when referring to "a range of a numerical value A to a numerical value B," the range includes the numerical value A and the numerical value B. In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

The present disclosure encompasses a combination of matters recited in any two or more claims selected from plural claims in the appended claims. In other words, as long as no technical contradiction arises, matters recited in any two or more claims selected from plural claims in the appended claims can be combined.

A negative electrode material for secondary batteries according to an embodiment of the present disclosure includes a composite material. The composite material contains an active phase that is reactive with Li, and an amorphous material phase. The composite material may be in any form, and may be supplied in a bulk state, in a sheet state, or as a powder containing a plurality of particles, and the like.

<Composite material>

The active phase is formed of a material that exhibits capacity through a Faradaic reaction with lithium (Li). The active phase is dispersed in the amorphous material phase. The active phase undergoes repeated expansion and contraction accompanied by a significant volume change, during charging and discharging. In other words, the active phase is a material that expands more greatly than the amorphous material phase when the negative electrode active material absorbs lithium. The active phase may contain a metal element that alloys with lithium.

The active phase is constituted of a material capable of electrochemically reversibly reacting with Li during charging and discharging. The particle diameter of the active phase is 10 nm or less, and may be 5 nm or less, or 3 nm or less. The particle diameter of the active phase may be 1 nm or more. The smaller the particle diameter of the active phase

is, the more likely a network by interconnection between the active phases is to be formed within the amorphous material phase. This increases the lithium ion conductivity within the composite material, and enhances the utilization rate of the active phase (i.e., the reactivity with Li). The active phase is considered to gradually change its morphology along with charging and discharging, forming contact points between the active phases. The active phase being in a very small size of 10 nm or less is considered to facilitate easy deformation and moving of the active phases, or easy formation of contacts between the active phases. As a result of such a change in morphology, the number of isolated active phases within the amorphous material phase is decreased, and the utilization rate is significantly improved.

When the particle diameter of the active phase is 10 nm or less, in general, a sharp peak attributed to the active phase is difficult to be observed using X-ray diffractometry (XRD). Therefore, the spectrum of the composite material obtained by X-ray diffractometry (XRD spectrum) may have no peak attributed to the active phase. The active phase can be a metal phase (including an intermetallic compound phase). The spectrum (XRD spectrum) of the composite material obtained by X-ray diffractometry, however, may have no peak attributable to the metal phase. For example, a material containing a Si phase whose size is sufficiently larger than 10 nm will have a peak attributed to the Si phase in the $2\theta$ range of 25° or more and 30° or less. On the other hand, when the active phase is a Si phase and its particle diameter is 10 nm or less, the spectrum of the composite material obtained by X-ray diffractometry may have no peak in the $2\theta$ range of 25° or more and 30° or less.

When the particle diameter is, for example, 5 nm or more, there is a case where the presence can be confirmed using an analytical apparatus such as a high-resolution STEM. In that case, the particle size can be determined as an average value of the maximum diameters of any 10 or more particles of the active phase. On the other hand, there may be a case where the size of the active phase is too small to be observed using an electron microscope. This indirectly indicates that the particle diameter of the active phase is, for example, 5 nm or less, or 3 nm or less, or smaller than that. In that case, the presence of the active phase can be confirmed by the exhibition of electrochemical capacity derived from the composite material. The composite material is, although its capacity depends on the content of the active phase, useful as an electrode active material if, for example, an irreversible capacity of 100 mAh/g or more is achieved.

Note that the composite material can have a sea-island structure when viewed microscopically. In the sea-island structure, the active phases constitute tiny island portions of 10 nm or less, and the amorphous material phase constitutes a continuous sea portion or a matrix. When the composite material is a powder, in each individual particle of the composite material, a plurality of island portions are dispersed in the sea portion.

There is a case where the active phase, even though being tiny, can be measured for its particle diameter. In that case, for example, with respect to 100 particles of the active phases, the maximum diameters are measured, and an average value of the maximum diameters may be specified as the particle diameter of the active phase.

(Amorphous material phase)

The amorphous material phase is formed of such a material that the capacity to be exhibited per unit mass (mAh/g) is smaller than that by the active phase (or a material that does not exhibit capacity). The amorphous material phase shows a small volume change or no volume change during charging and discharging. The amorphous material phase relaxes the stress due to expansion and contraction of the active phase, and suppresses the side reaction between the active phase and the electrolyte solution.

The amorphous material phase contains elements A, O (oxygen element), and C (carbon element). The element A is at least one element selected from the group consisting of Si, Sn, Ti, Al, and Mg. As will be described later, the active phase can be formed, when the amorphous material phase is formed, from one or some of the elements A contained in a raw material of the amorphous material phase.

The amorphous material phase forms a compound in which A, O, and C are randomly bonded by a covalent bond. The amorphous material phase has, for example, an A-O-C bond (covalent bond). In other words, the amorphous material phase is not a simple mixture or a simple composite of two or more kinds of compounds (when A = Si, SiO, SiC, etc.). The amorphous material phase is a phase whose crystal structure cannot be identified. The amorphous material phase may form a single phase that does not have an interface between different materials as observed in a composite of two or more kinds of materials. When the amorphous material phase contains A, O, and C as essential components, and is a phase whose crystal structure cannot be identified, the composite material can have increased hardness, and also, can have elasticity or flexibility that relaxes the stress due to expansion and contraction of the active phase.

In a cross section of the composite material, it is desirable that the amorphous material phase has substantially no grain boundaries. When the amorphous material phase has a continuous structure in which the amorphous material phase has substantially no grain boundaries, the hardness of the composite material is increased, and the phenomenon in which the electrolyte solution seeps into the grain boundaries is reduced. Thus, the side reaction involving the decomposition of the electrolyte solution is suppressed, and the material becomes less likely to deteriorate. In this case, the composite material can be formed as primary particles. Note that the amorphous material phase may have grain boundaries if they are slight. The state in which the amorphous material phase has substantially no grain boundaries can be confirmed on a

cross-sectional SEM image of the composite material. If, in a cross-sectional SEM image of the composite material with a field of view of 500 $nm^2$, the total length of the grain boundaries in the amorphous material phase is 1 nm or less, it can be said that the amorphous material phase has substantially no grain boundaries. It is desirable to perform the same measurement on any 10 composite particles, and average the measured values, to determine the length of the grain boundaries.

From the viewpoint of reducing the irreversible capacity, it is preferable that the amorphous material phase contains an element M (cation species). The element M is, for example, at least one selected from the group consisting of Li, Na, K, Mg, Ca, B, and Al. In particular, the amorphous material phase preferably contains at least Li as the element M. When the element M contained in the amorphous material phase is an element other than Li, during charging and discharging of a lithium-ion secondary battery including a negative electrode containing the composite material, the element other than Li is replaced with Li, and Li ions are irreversibly captured in the amorphous material phase, which may cause a decrease in capacity in some cases. When the element M includes Li, the above decrease in capacity can be suppressed.

When the amorphous material phase is expressed by a general formula (1): $M_aAO_xN_yC_z$, the general formula (1) satisfies, for example, $0 < a \leq 4$, $0 < x \leq 3$, $0 \leq y \leq 1$, and $0 \leq 1\text{-}0.5x\text{-}0.75y \leq z$. Such a composition is empirically determined from the composition of the amorphous material phase produced by a later-described production method. During charging and discharging, Li can be trapped as an irreversible capacity.

From the viewpoint of reducing the irreversible capacity, it is preferable that the amorphous material phase has been already doped with an element M (e.g., Li) when producing a composite material (before charging for the first time). That is, it is preferable that, in the general formula (1), $0 < a \leq 4$ is satisfied. Moreover, "a" in the general formula (1) is more preferably 0.1 or more, and even more preferably 1 or more. From the viewpoint that when M is Li, the elution of the amorphous material phase into water is easily suppressed, "a" in the general formula (1) may be 2 or less.

In the general formula (1), the range of "z" indicating the atomic ratio of C to A may be $0.1 \leq z \leq 6$, may be $0.5 \leq z \leq 4$, and may be $0.5 \leq z \leq 3$. When the amount of carbon contained in the amorphous material phase is controlled within the above range, the A-O-Li bond is less likely to be formed, so that the irreversible capacity of the composite material is reduced, and the amorphous material phase itself has a capacity, which is beneficial also for achieving high capacity. In the general formula (1), M is preferably Li.

Analysis of the composition of the amorphous material phase (quantitative determination of each element in the composite material) can be performed by scanning electron microscope (SEM)-energy dispersive X-ray (EDX) analysis. In the SEM-EDX analysis, a cross section of the composite material is observed using an SEM, and an elemental mapping analysis is performed by EDX. The observation magnification is preferably 2,000 to 20,000 times. The mapping analysis is desirably performed on a region 1 μm or more inward from the peripheral edge of the cross section of the particle of the composite material. In the mapping analysis, the content ratio of elements (i.e., composition) can be calculated using an image analysis software. The composition may be determined by performing the same measurement on any 10 composite particles, and averaging the measured values. The maximum diameter of a particle subjected to measurement is desirably 5 μm or more. The cross section of the particle of the composite material may be formed, for example, by packing the composite material into a thermosetting resin, and curing the resin, which is then processed using a cross-section polisher (CP), or by disassembling the battery to take out the negative electrode, immersing the negative electrode in a thermosetting resin, and curing the resin, which is then processed to obtain a cross section of the negative electrode.

Desirable cross-sectional SEM-EDX analysis measurement conditions are shown below.

Processing apparatus: IB-19520CCP (cross-section polisher) available from JEOL Ltd.

Processing conditions: accelerating voltage 6 kV
Current value: 150 to 180 μA
Degree of vacuum: $5\times10^{-4}$ to $2\times10^{-3}$ Pa
Measuring apparatus: JEM-F200 available from JEOL Ltd. (field emission scanning electron microscope), JED-2300T available from JEOL Ltd. (EDX detector)
Acceleration voltage during analysis: 200 kV

In the C1s spectrum obtained by X-ray photoelectron spectroscopy (XPS) of the composite material, C1s peaks of several species contained in the amorphous material phase are observed. For example, C1s peaks attributable to the A-C bond, A-O-C bond, C-O bond, C-C bond, and the like are observed. The presence of such peaks indicates that the amorphous material phase contains a considerable amount of region other than oxides. In particular, the C1s peak attributed to the C-C bond is a peak characteristic of the composite material according to the present disclosure, and indicates that the amorphous material phase includes a region constituted of carbon. The peak derived from the C-C bond is observed, for example, at around 284.8 eV.

The composite material may contain at least one selected from the group consisting of graphite, hard carbon, and soft carbon, which is/are dispersed in the amorphous material phase.

In the XPS of a composite material, a powder of the composite material is used as a sample, and analysis is performed from the sample surface along the depth direction of the composite material (10 to 100 nm), to analyze the internal state of the composite material.
Desirable XPS measurement conditions are shown below.

Measuring apparatus: PHI5000, available from ULVAC-PHI, Inc.
X-ray used: Monochrome Al-K$\alpha$, 25 W, 15 kV
Degree of vacuum: $5\times10^{-7}$ Pa

The composite material may have voids within the amorphous material phase. In this case, the active phase may be exposed on the inner wall of the voids. The presence of the voids can help relax the stress associated with expansion and contraction of the active phase. The voids that are present within the amorphous material phase can be confirmed in a cross-sectional SEM image of the composite material.

(Active phase)

A material constituting the active phase can contain an element A. Also, the material constituting the active phase can contain at least one selected from the group consisting of a metal phase and an intermetallic compound phase. In that case, the metal phase or the intermetallic compound phase can contain the element A. The active phase may be contained singly or in combination of two or more kinds, in the composite material.
The element A constituting the active phase can be at least one selected from the group consisting of Si, Sn, Ti, Al, and Mg. Therefore, the metal phase can be at least one selected from the group consisting of a Si phase, a Sn phase, a Ti phase, an Al phase, and a Mg phase. The intermetallic compound phase can be, for example, at least one selected from the group consisting of a $CrSi_2$ phase, a $MnSi_2$ phase, an $FeSi_2$ phase, a $CoSi_2$ phase, a $NiSi_2$ phase, and a LiNiSn phase. Among them, the Si phase and the Sn phase have high capacity, and the Si phase is particularly preferred.
The active phase or the metal phase (including the intermetallic compound phase) may contain an element M (at least one selected from the group consisting of Li, Na, K, Mg, Ca, B, and Al) that may be contained in the amorphous material phase. For example, when the active phase contains Si, $M_xSi$ can be formed as an intermetallic compound.
The content ratio of the active phase in the composite material can be controlled as appropriate. From the viewpoint of achieving high capacity, it is desirable that the content ratio of the active phase in the composite material is as high as possible. On the other hand, from the viewpoint of suppressing the stress caused by the expansion and contraction of the active phase and suppressing the side reaction between the active phase and the electrolyte solution, the composite material is required to contain a certain amount of the amorphous material phase. The content ratio of the active phase in the composite material is, for example, 50 mass% or less, may be 40 mass% or less, and may be 25 mass% or less. The content ratio of the active phase in the composite material may be 5 mass% or more, and may be 10 mass% or more.
The content ratio of the active phase in the composite material can be controlled by the content ratio of the element A. When, for example, the composite material containing an active phase is obtained by reducing an organometallic compound containing elements A, O, and C, generally, the content ratio of the element A in the composite material becomes equal to the content ratio of the active phase, or the content ratio of the active phase becomes smaller than that of the element A. Therefore, in the case of controlling the content ratio of the active phase in the composite material within the range described above, the content ratio of the element A in the composite material is also preferably set to, for example, 50 mass% or less, which may be 40 mass% or less, and may be 25 mass% or less. The content ratio of the element A in the composite material may be 5 mass% or more, and may be 10 mass% or more.
When the active phase contains a Si phase, the content ratio of the Si phase in the composite material can be measured by Si-NMR.

(Conductive layer)

From the viewpoint of improving the electrical conductivity, at least part of the surface of the composite material may be covered with a conductive layer. The conductive layer may contain carbon. The thickness of the conductive layer is preferably thin enough not to substantially influence the average particle diameter of the composite particles. The thickness of the conductive layer is, for example, 1 nm or more and 10 nm or less.
The conductive layer is formed by mixing a raw material of the conductive layer with the composite particles, and firing the mixture, to carbonize the raw material of the conductive layer. As the raw material of the conductive layer, for example, coal pitch or coal tar pitch, petroleum pitch, phenolic resin, and the like can be used. The firing of the mixture of the raw material of the conductive layer and the composite material is performed, for example, in an inert atmosphere (e.g., atmosphere of argon, nitrogen, etc.). The firing temperature is, for example, 450 °C or higher and 1000 °C or lower. The firing time is, for example, 1 hour or more and 10 hours or less.

(Carbon material)

The negative electrode material may contain, in addition to the composite material, at least one carbon material selected from the group consisting of graphite (natural graphite, artificial graphite), hard carbon, and soft carbon. The carbon material may be formed into a composite with the amorphous material phase.

The carbon material, whose degree of expansion and contraction during charging and discharging is smaller than that of the active phase, can be used in combination with the composite material, to easily improve the battery cycle characteristics. The ratio of the carbon material to the total of the composite material and the carbon material is, for example, 70 mass% or more and 99 mass% or less, may be 85 mass% or more and 95 mass% or less, and may be 90 mass% or more and 95 mass% or less. In this case, high capacity and more favorable cycle characteristics can be both easily achieved.

[Method for producing negative electrode material for secondary batteries]

Next, an example of a method for producing a negative electrode material for secondary batteries will be described. In the following example, the method for producing a negative electrode material for secondary batteries including the composite material in which an active phase is dispersed in an amorphous material phase includes a first step and a second step.

(i) First step

The first step is a first step of reducing an organometallic compound, to obtain an intermediate containing an active phase having a particle diameter of 10 nm or less. The organometallic compound contains elements A, O, and C. The element A is at least one selected from the group consisting of Si, Sn, Ti, Al, and Mg.

The organometallic compound has an organic group or a halogen atom bonded to the element A. Here, a halide of the element A having no organic group is also included in the organometallic compounds. The organic group may be an alkyl group, an alkoxy group, a cyclopentadienyl group, and the like. The organometallic compound may be solid, liquid, or gas at room temperature.

As an organometallic compound containing Si as the element A, for example, N-sec-butyl(trimethylsilyl)amine, 1,3-diethyl-1,1,3,3-tetramethyldisilazane, tetramethylsilane, tetraethoxysilane, silicon tetrachloride, a silane coupling agent, and the like can be used. In particular, a silane coupling agent is preferred because it is easy to handle and can be chosen from a variety of options.

The silane coupling agent has a reactive organic group or functional group and a hydrolyzable group. The reactive organic group or functional group is preferably an epoxy group, a halogenated alkyl group, an amino group, an ureido group, a mercapto group, an isocyanate group, a polymerizable group, and the like. Examples of the polymerizable group include a (meth)acryloyl group and a vinyl group. The hydrolyzable group is preferably, for example, an alkoxy group, such as methoxy group, ethoxy group, and propoxy group.

Specifically, examples of the silane coupling agent include 2-(3,4-epoxycyclohexyl)ethyltrimethoxysilane, 3-glycidoxypropyltrimethoxysilane($\gamma$-glycidoxypropyltrimethoxysilane), 3-glycidoxypropylmethyldiethoxysilane, 3-glycidoxypropyltriethoxysilane, 3-chloropropyltrimethoxysilane, N-2-(aminoethyl)-3-aminopropylmethyldimethoxysilane, N-2-(aminoethyl)-3-aminopropyltriethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane, 3-ureidopropyltriethoxysilane, 3-mercaptopropylmethyldimethoxysilane, 3-mercaptopropyltrimethoxysilane, bis(triethoxysilylpropyl)tetrasulfide, 3-isocyanatopropyltriethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane($\gamma$-acryloxypropyltrimethoxysilane), vinyltrichlorosilane, vinyltrimethoxysilane, vinyltriethoxysilane, and p-styryltrimethoxysilane. In particular, at least one selected from the group consisting of 3-aminopropyltrimethoxysilane and 3-aminopropyltriethoxysilane is preferred.

As an organometallic compound containing Sn as the element A, for example, diisopropyltin, tin acetate, tin octoate, dibutyltin acetate, tetraphenyltin, tetraethyltin, tetramethyltin, dioctyltin oxide, tin octoate, and the like can be used.

As an organometallic compound containing Ti as the element A, for example, bis(t-butylcyclopentadienyl) titanium(IV) dichloride, tetrakis(dimethylamino)titanium(IV), titanium tetrachloride ($TiCl_4$), titanium(IV) ethoxide, a titanium coupling agent, and the like can be used.

As an organometallic compound containing Al as the element A, triethylaluminum, diethylchloroaluminum, diethylaluminum ethoxide, triisobutylaluminum, trihexylaluminum, and the like can be used.

As an organometallic compound containing Mg as the element A, for example, various compounds used as a

Grignard reagent can be used.

The method of reducing the organometallic compound is not particularly limited, one exemplary method is to react with a reducing agent. Examples of the reducing agent include, but are not limited to, hydrogen gas, hydrogen sulfide, sulfur dioxide, hydrogen peroxide, sodium thiosulfate, tin(II) chloride, iron(II) sulfide, organic acids, sugar alcohols, and potassium iodide. In particular, an organic acid and a sugar alcohol are preferred because they are easy to handle. The organic acid may be in the form of a salt. Examples of the organic acid include oxalic acid, ascorbic acid, and sodium ascorbate. Examples of the sugar alcohol include D-glucose.

When the organometallic compound can form a solution, such as an aqueous solution, a reducing agent may be added to the solution, to activate the reducing agent. For example, adding an organic acid to an aqueous solution of a silane coupling agent and stirring the mixture causes a reduction reaction to proceed, to produce a nanosilicon having a particle diameter of 10 nm or less, as an intermediate. When synthesizing an intermediate from a solution, a liquid dispersion of the intermediate is obtained. From the liquid dispersion of the intermediate, the intermediate may be separated by dialysis, centrifugation, centrifugal ultrafiltration, or other techniques.

The particle diameter of the active phase (e.g., nanosilicon) contained in the intermediate can be measured by dynamic light scattering spectroscopy. To disperse an active phase having a particle diameter of 10 nm or less within an amorphous material phase, the median diameter measured by dynamic light scattering spectroscopy of the active phase (e.g., nanosilicon) produced as the intermediate is also preferably set to 10 nm or less, which may be set to 5 nm or less, may be set to 3 nm or less, and may be smaller than that.

When an element M (at least one element selected from the group consisting of Li, Na, K, Mg, Ca, B, and Al) that may be contained in the amorphous material phase is contained in the active phase or metal phase (including the intermetallic compound phase), a compound containing an element M may be doped into the organometallic compound before subjected to the reduction. The molar ratio M/Si of the element M to the element A may be, for example, 0.01 or more and 5 or less, and may be 0.1 or more and 2 or less.

The compound containing an element M may be, for example, a salt formed from an anion of carbonic acid or carboxylic acid (formic acid, acetic acid, benzoic acid, etc.) and a cation of the element M. When the element M is lithium, the compound containing an element M may be, for example, at least one element selected from the group consisting of lithium carbonate, lithium formate, lithium acetate, and lithium benzoate. When the organometallic compound can form a solution, such as an aqueous solution, the compound containing an element M may be dissolved in the solution.

(ii) Second step

The second step is a step of firing the intermediate containing the active phase having a particle diameter of 10 nm or less, to obtain a composite material containing an amorphous material phase and the active phase dispersed in the amorphous material phase. The amorphous material phase is derived from the organometallic compound. Therefore, the amorphous material phase contains elements A, O, and C.

Before firing the intermediate, the intermediate may be granulated. When the intermediate is obtained as a liquid dispersion, the liquid dispersion can be easily granulated by subjecting it to spray drying. A binder for facilitating granulation may be dissolved in the liquid dispersion before spray drying. When the liquid dispersion contains water or a polar solvent, such as N-methyl-2-pyrrolidone, a water-soluble resin may be used as a binder. In that case, an intermediate containing the binder is obtained. The binder entangles with the active phase, to form particles suitable for granulation done by spray drying.

Examples of the water-soluble resin include saccharides, polyvinylpyrrolidone, polyvinyl alcohol, water-soluble polyesters, polystyrene sulfonic acid, polyacrylic acid, polymethacrylic acid, polyacrylamide, 2-acrylamido-2-methylpropanesulfonic acid, oxazole-based water-soluble polymers (oxazole-2-ethyl-4,5-dihydro homopolymer, etc.), and salts thereof (alkali metal salts, ammonium salts, etc.). Examples of the saccharides include carboxymethyl cellulose (CMC), methyl cellulose, sucrose, mannitol, sorbitol, xylitol, pentaerythritol, and trimethylolpropane.

The intermediate may be mixed with a polymer, before firing the intermediate. The intermediate to be mixed with a polymer may be an intermediate containing a binder, and may be particles granulated by spray drying or other methods. The polymer may be any polymer that is carbonized by firing. As the polymer, for example, coal pitch or coal tar pitch, petroleum pitch, a phenolic resin, and the like can be used.

The amount of the intermediate relative to 100 parts by mass of the polymer may be set as appropriate depending on the desired proportion of the active phase in the composite material, and is, for example, 20 parts by mass or more and 250 parts by mass or less, which may be 50 parts by mass or more and 200 parts by mass or less.

In combination with the polymer, at least one selected from the group consisting of graphite (natural graphite, artificial graphite), hard carbon, and soft carbon may be mixed with the intermediate.

The firing can be performed in an inert atmosphere at a temperature of, for example, 600 °C or higher and 1000 °C or lower. The inert atmosphere may be a reduced pressure atmosphere, and may be under inert gas flow. Examples of the inert gas include argon, nitrogen, and helium. The firing time can be any length of time that allows the carbon atoms

contained in the polymer to be sufficiently carbonized. The composite material obtained after firing is a solid with no fluidity. By pulverizing the composite material, a powdered composite material is produced.

By firing, the water-soluble resin, the polymer, the compound containing an element M, and other components are decomposed, to produce gas. For example, $CO_2$ gas is produced, which causes voids to be formed within the amorphous material phase.

Note that the above is merely one example of the production method. When particles of an active phase having a particle diameter of 10 nm or less (hereinafter sometimes referred to as "active particles") are commercially available, the active particles are mixed with a water-soluble resin, which may be granulated together with the water-soluble resin.

[Secondary battery]

A secondary battery according to an embodiment of the present disclosure includes a positive electrode, a negative electrode, and an electrolyte. The negative electrode includes the above-described negative electrode material for secondary batteries.

(Negative electrode)

The negative electrode includes, for example, a sheet-like negative electrode current collector, and a negative electrode mixture layer formed on the negative electrode current collector. The negative electrode mixture layer is a negative electrode mixture formed in a layer or an applied film. The negative electrode mixture includes a negative electrode active material as an essential component, and may include a binder, a conductive agent, a thickener, and the like, as optional components. The negative electrode active material includes the negative electrode material for secondary batteries.

The negative electrode mixture layer can be formed by, for example, applying a negative electrode slurry of a negative electrode mixture dispersed in a dispersion medium, onto a surface of the negative electrode current collector, followed by drying. The applied film after drying may be rolled as necessary.

As the negative electrode current collector, a non-porous conductive substrate (metal foil, etc.) or a porous conductive substrate (mesh, net, punched sheet, etc.) is used. Examples of the material of the negative electrode current collector include stainless steel, nickel, nickel alloy, copper, and copper alloy.

The binder may be a resin material, examples of which include: fluorocarbon resins, such as polytetrafluoroethylene and polyvinylidene fluoride (PVDF); polyolefin resins, such as polyethylene and polypropylene; polyamide resins, such as aramid resin; polyimide resins, such as polyimide and polyamide imide; acrylic resins, such as polyacrylic acid, polymethyl acrylate, and ethylene-acrylic acid copolymer; vinyl resins, such as polyacrylonitrile and polyvinyl acetate; polyvinylpyrrolidone; polyethersulfone; and rubbery materials, such as styrene-butadiene copolymer rubber (SBR). The binder may be used singly or in combination of two or more kinds.

Examples of the conductive agent include carbon black, such as acetylene black, carbon nanotubes (hereinafter sometimes referred to as CNTs), metal fibers, fluorinated carbon, metal powder, conductive whiskers, such as zinc oxide and potassium titanate, conductive metal oxides, such as titanium oxide, and organic conductive materials, such as phenylene derivatives. These may be used singly or in combination of two or more kinds.

(Positive electrode)

The positive electrode includes a positive electrode active material capable of electrochemically absorbing and releasing lithium ions. The positive electrode includes, for example, a positive electrode current collector, and a positive electrode mixture layer formed on a surface of the positive electrode current collector. The positive electrode mixture layer can be formed by applying a positive electrode slurry of a positive electrode mixture dispersed in a dispersion medium, onto a surface of the positive electrode current collector, followed by drying. The applied film after drying may be rolled as necessary. The positive electrode mixture includes a positive electrode active material as an essential component, and may include a binder, a conductive agent, and the like, as optional components.

As the positive electrode active material, for example, a lithium-containing composite oxide can be used. Examples thereof include $Li_aCoO_2$, $Li_aNiO_2$, $Li_aMnO_2$, $Li_aCO_bNi_{1-b}O2$, $Li_aCO_bM_{1-b}O_c$, $Li_aNi_{1-b}M_bO_c$, $Li_aMn_2O_4$, $Li_aMn_{2-b}M_bO_4$, $LiMPO_4$, and $Li_2MPO_4F$, where M is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. The value "a" representing the molar ratio of lithium increases and decreases during charging and discharging.

As the binder and the conductive agent, those as exemplified for the negative electrode can be used. As the conductive agent, graphite, such as natural graphite and artificial graphite, may also be used.

The shape and the thickness of the positive electrode current collector can be respectively selected from the shapes and the ranges corresponding to those of the negative electrode current collector. Examples of the material of the

positive electrode current collector include stainless steel, aluminum, aluminum alloy, and titanium.

(Electrolyte)

The electrolyte has lithium ion conductivity. The electrolyte may be a liquid electrolyte (electrolyte solution) or a solid electrolyte.

As the solid electrolyte, for example, a solid or gel polymer electrolyte, an inorganic solid electrolyte, and the like can be used. As the inorganic solid electrolyte, for example, a known material for use in all-solid lithium-ion secondary batteries and the like (e.g., oxide-based solid electrolyte, sulfide-based solid electrolyte, halide-based solid electrolyte) can be used. The polymer electrolyte includes, for example, a lithium salt and a matrix polymer, or a nonaqueous solvent, a lithium salt, and a matrix polymer. The matrix polymer may be, for example, a polymer material that absorbs a nonaqueous solvent and turns into a gel. Examples of the polymer material include fluorocarbon resins, acrylic resins, and polyether resins.

The electrolyte solution contains a solvent and an electrolyte salt. The solvent may be a nonaqueous solvent, and may be water. In the case of a lithium-ion secondary battery, the electrolyte salt includes at least a lithium salt.

The concentration of the lithium salt in the electrolyte solution is, for example, 0.5 mol/L or more and 2 mol/L or less. By setting the lithium salt concentration within the above range, an electrolyte solution having excellent ion conductivity and moderate viscosity can be obtained. The lithium salt concentration, however, is not limited to the above.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyrolactone (GBL), and $\gamma$-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The nonaqueous solvent may be used singly or in combination of two or more kinds.

Examples of the lithium salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylate, LiCl, LiBr, LiI, borates, and imide salts. The lithium salt may be used singly, or in combination of two or more kinds.

The electrolyte solution may further contain an additive. Examples of the additive include vinylene carbonate (VC), fluoroethylene carbonate (FEC), and vinyl ethyl carbonate (VEC).

(Separator)

Usually, it is desirable to interpose a separator between the positive electrode and the negative electrode. The separator has ion permeability and has electrically insulating properties. As the separator, a microporous thin film, a woven fabric, a nonwoven fabric, and the like can be used. As the material of the separator, a polyolefin, such as polypropylene and polyethylene, is preferred.

One example of the structure of the secondary battery is a structure in which an electrode group formed by winding the positive electrode and the negative electrode with the separator interposed therebetween is housed in an outer body, together with the electrolyte solution. A stacked electrode group in which the positive electrode and the negative electrode stacked together, with a separator interposed therebetween may be adopted. The secondary battery may be in any form, such as cylindrical type, prismatic type, coin type, button type, and laminate type.

An example of the secondary battery according to the present disclosure will be described below with reference to FIG. 1. The battery includes a bottomed prismatic battery case 4, and an electrode group 1 and an electrolyte solution (not shown) which are housed in the battery case 4. The electrode group 1 includes a belt-shaped negative electrode, a belt-shaped positive electrode, and a separator interposed therebetween. The negative electrode current collector of the negative electrode is electrically connected, via a negative electrode lead 3, to a negative electrode terminal 6 provided at a sealing plate 5. The negative electrode terminal 6 is insulated from the sealing plate 5 by a resin gasket 7. The positive electrode current collector of the positive electrode is electrically connected, via a positive electrode lead 2, to the back side of the sealing plate 5. That is, the positive electrode is electrically connected to the battery case 4 serving as a positive electrode terminal. The periphery of the sealing plate 5 is fitted into the open end of the battery case 4, and the fitted portion is laser welded. The sealing plate 5 has an electrolyte solution injection port, which is closed with a sealing plug 8 after the injection.

(Supplementary notes)

The above description discloses the following techniques.

(Technique 1)

A negative electrode material for secondary batteries, comprising:

a composite material, the composite material containing an active phase that is reactive with Li, and an amorphous material phase, wherein
the active phase is dispersed in the amorphous material phase, and has a particle diameter of 10 nm or less,
the amorphous material phase contains elements A, O, and C, and
the element A is at least one selected from the group consisting of Si, Sn, Ti, Al, and Mg.

(Technique 2)

The negative electrode material for secondary batteries according to technique 1, wherein the particle diameter is 5 nm or less.

(Technique 3)

The negative electrode material for secondary batteries according to technique 1 or 2, wherein a spectrum obtained by X-ray diffractometry of the composite material has no peak in a 2θ range of 25° or more and 30° or less.

(Technique 4)

The negative electrode material for secondary batteries according to any one of techniques 1 to 3, wherein in a cross section of the composite material, the amorphous material phase has substantially no grain boundaries.

(Technique 5)

The negative electrode material for secondary batteries according to any one of techniques 1 to 4, wherein

the amorphous material phase is represented by a general formula: $M_aSiO_xN_yC_z$,
the general formula satisfies

$$0 < a \leq 4,$$

$$0 < x \leq 3,$$

$$0 \leq y \leq 1,$$

and

$$0 \leq 1-0.5x-0.75y \leq z,$$

and
the element M is at least one selected from the group consisting of Li, Na, K, Mg, Ca, B, and Al.

(Technique 6)

The negative electrode material for secondary batteries according to any one of techniques 1 to 5, wherein the element M includes at least Li.

(Technique 7)

The negative electrode material for secondary batteries according to any one of techniques 1 to 6, wherein the

element A includes at least Si.

(Technique 8)

The negative electrode material for secondary batteries according to any one of techniques 1 to 7, wherein voids are present within the amorphous material phase.

(Technique 9)

The negative electrode material for secondary batteries according to any one of techniques 1 to 8, further comprising:

a conductive layer covering a surface of the composite material, wherein
the conductive layer contains carbon.

(Technique 10)

The negative electrode material for secondary batteries according to any one of techniques 1 to 9, wherein a material constituting the active phase includes at least one selected from the group consisting of a metal phase and an intermetallic compound phase.

(Technique 11)

The negative electrode material for secondary batteries according to technique 10, wherein

the metal phase is at least one selected from the group consisting of a Si phase, a Sn phase, a Ti phase, an Al phase, and a Mg phase, and
the intermetallic compound phase is at least one selected from the group consisting of a $CrSi_2$ phase, a $MnSi_2$ phase, an $FeSi_2$ phase, a $CoSi_2$ phase, a $NiSi_2$ phase, and a LiNiSn phase.

(Technique 12)

The negative electrode material for secondary batteries according to technique 10 or 11, wherein the metal phase further includes at least one selected from the group consisting of Li, Na, K, Mg, Ca, B, and Al.

(Technique 13)

The negative electrode material for secondary batteries according to any one of techniques 1 to 12, wherein a content ratio of the active phase in the composite material is 50 mass% or less.

(Technique 14)

The negative electrode material for secondary batteries according to any one of techniques 1 to 13, wherein the content ratio of the active phase in the composite material is 40 mass% or less.

(Technique 15)

The negative electrode material for secondary batteries according to any one of techniques 1 to 14, wherein at least one selected from the group consisting of graphite, hard carbon, and soft carbon is further dispersed in the amorphous material phase.

(Technique 16)

A secondary battery, comprising:

a positive electrode; a negative electrode; and an electrolyte, wherein
the negative electrode includes the negative electrode material for secondary batteries according to any one of techniques 1 to 15.

(Technique 17)

A method for producing a negative electrode material for secondary batteries, the method comprising:

a first step of reducing an organometallic compound, to obtain an intermediate containing an active phase having a median diameter measured by dynamic light scattering spectroscopy of 10 nm or less; and
a second step of firing the intermediate, to obtain a composite material containing an amorphous material phase and the active phase dispersed in the amorphous material phase, wherein
the organometallic compound and the amorphous material phase contain elements A, O, and C, and the element A is at least one selected from the group consisting of Si, Sn, Ti, Al, and Mg.

(Technique 18)

The method for producing a negative electrode material for secondary batteries according to technique 17, further comprising a step of granulating the intermediate, before firing the intermediate.

(Technique 19)

The method for producing a negative electrode material for secondary batteries according to technique 17 or 18, further comprising:

a step of mixing the intermediate with a polymer, before firing the intermediate, wherein
the polymer is carbonized in the second step.

(Technique 20)

The method for producing a negative electrode material for secondary batteries according to any one of techniques 17 to 19, wherein the organometallic compound is a silane coupling agent.

(Technique 21)

The method for producing a negative electrode material for secondary batteries according to technique 20, wherein the silane coupling agent is at least one selected from the group consisting of 3-aminopropyltrimethoxysilane and 3-aminopropyltriethoxysilane.

[Examples]

The present disclosure will be more specifically described below with reference to Examples and Comparative Examples. The present disclosure, however, is not limited to the following Examples.

<<Example 1>>

(Composite material A)

To 400 mL of pure water, 125 mL of 0.1 M aqueous sodium ascorbate solution was added, and after bubbling with nitrogen for 2 hours or more, 100 mL of 3-aminopropyltrimethoxysilane was added dropwise thereto, and stirred at 500 rpm for 20 minutes in a nitrogen atmosphere, to produce a nanosilicon. The production of the nanosilicon (intermediate) was verified by irradiating the aqueous solution with UV light having a wavelength of 365 nm, to confirm green light emission.
FIG. 2 is a particle size distribution measured by dynamic light scattering spectroscopy of the produced nanosilicon (intermediate). FIG. 2 shows that the median diameter of the produced nanosilicon is 3 nm or less.
To the obtained nanosilicon dispersion, 200 g of an aqueous CMC solution at a concentration of 1.8 mass% was added and stirred, and then granulated by spray drying (spray flow rate: 0.6 $m^3$/min, nozzle temperature: 130 °C). The obtained granulated powder was vacuum-dried overnight at 60 °C, to which 9 parts by mass of pitch was then mixed, relative to 100 parts by mass of the granulated powder, and the mixture was fired at 700 °C for 5 hours in a nitrogen atmosphere. The fired powder was crushed in a mortar, stirred to wash in pure water for 10 minutes, and after suction filtration, vacuum-dried overnight at 60 °C, to obtain a composite material A1 (Si/C powder).
The content ratio of the silicon element in the composite material A1 calculated by ICP emission spectroscopy was 37 mass%.

FIG. 3A is an XRD spectrum of the composite material A1 (Si/C powder) containing a nanosilicon (median diameter 3 nm or less), and FIG. 3B is a reference XRD spectrum of a crystalline nanosilicon (median diameter 40 nm). The composite material A1 shows an amorphous spectrum, and the XRD spectrum has no peak of silicon crystal in the range of $2\theta = 25°$ or more and 30° or less.
FIG. 4 is a SEM image of a particle of the obtained composite material A1. FIG. 5 is a cross-sectional STEM-EDX image of a particle of the composite material A1. FIG. 6 is an FFT image of one example of a particle of the composite material A1.
In the STEM image of FIG. 5, an amorphous material phase and spotted voids are observed, but no particles of the active phase (nanosilicon) are observed. In FIG. 6, no spots attributed to the active phase (nanosilicon) are observed. However, as described later, since the composite material A1 exhibits high capacity derived from silicon, it is clear that the nanosilicon of 3 nm or less is dispersed in the amorphous material phase.

[Evaluation 1]

A test cell provided with a negative electrode including the composite material A1 was prepared by the following procedure, to measure its capacity.

<Production of test cell>

(Production of working electrode (negative electrode))

A negative electrode material, carbon nanotubes (CNTs), polyacrylic acid (PAA), styrene-butadiene copolymer rubber (SBR), carboxymethyl cellulose (CMC), and an appropriate amount of water were mixed, to prepare a negative electrode slurry. The added amounts of the CNTs, the PAA, the CMC, and the SBR were 0.5 parts by mass, 5 parts by mass, 5 parts by mass, and 5 parts by mass, respectively, relative to 100 parts by mass of the negative electrode material.
The negative electrode slurry was applied onto one surface an electrolytic copper foil serving as a current collector, and after punched out to a size of 2 cm × 2 cm, dried, to form a negative electrode mixture layer. A negative electrode was thus obtained.

(Preparation of counter electrode)

A lithium metal foil was attached to one surface of an electrolytic copper foil (current collector), and punched out in a square shape with one side of 2.5 cm, to obtain a counter electrode.

(Preparation of electrolyte solution)

A mixed solvent containing ethylene carbonate (EC), ethyl methyl carbonate (EMC), and dimethyl carbonate (DMC) in a volume ratio of EC:EMC:DMC = 4:1:15 was obtained. $LiPF_6$ was dissolved in the mixed solvent at a concentration of 1.3 mol/L, to prepare an electrolyte solution.

(Assembly of test cell)

The negative electrode and the counter electrode were arranged facing each other, with a separator interposed therebetween, to constitute an electrode body. The separator used here was a microporous polyolefin film. The electrode body was housed in an outer body made of an aluminum laminate sheet. After the electrolyte solution was injected thereinto, the opening of the outer body was sealed. At this time, a lead attached to each of the negative electrode and the counter electrode was partially exposed from the outer body. In this way, a test cell was obtained.

<Charge-discharge test>

With respect to the test cell, the following charging and discharging were performed in a thermostatic chamber at 25 °C. The rest time between charging and discharging was set to 20 minutes.

(Charging)

A constant-current charging was performed at 0.1C (1C is a current value at which the design capacity is discharged in one hour) until the cell voltage reached 0.005 V. The subsequent rest time was set to 20 minutes. Next, a constant-current charging was performed at 0.01C until the cell voltage reached 0.005 V. The subsequent rest time was set

to 20 minutes. This was further followed by a constant-current charging performed at 0.001C until the cell voltage reached 0.005 V.

(Discharging)

A constant-current discharging was performed at 0.1C until the cell voltage reached 1 V. The subsequent rest time was set to 20 minutes. Next, a constant-current discharging was performed at 0.01C until the cell voltage reached 1 V. The subsequent rest time was set to 20 minutes. This was further followed by a constant-current discharging performed at 0.001C until the cell voltage reached 1 V.

From the above charging and discharging, the charge capacity per unit mass (measured charge capacity) of the negative electrode material (composite particles) was calculated. Given that the theoretical capacity of Si was 4200 mAh/g, the charge capacity (estimated charge capacity) estimated from the amount of Si contained in the composite material A1 was calculated. The measured charge capacity was divided by the estimated charge capacity, to determine a utilization rate of Si contained in the composite material. The evaluation results are shown in Table 1.

[Table 1]

| composite material | D50 of Si (nm) | Si content ratio (%) | estimated charge capacity (mAh/g) | measured charge capacity (mAh/g) | Si utilization rate (%) |
|---|---|---|---|---|---|
| A1 | 3 | 37 | 1554 | 1380 | 89 |
| B1 | 40 | 45 | 1890 | 1210 | 64 |
| B2 | 40 | 45 | 1890 | 1560 | 83 |

<<Comparative Example 1>>

As the material constituting the active phase, silicon nanoparticles having an average particle diameter of 40 nm were prepared. The nanoparticles was added in an amount of 100 parts by mass, relative to 200 parts by mass of polycarbosilane (represented by a formula (B1) below, where R1 and R2 are -H group and $-CH_2-CH=CH_2$ group, respectively, and liquid at room temperature) as an organosilicon polymer, and mixed until a uniform slurry was attained, to obtain a mixture. The resultant mixture was fired in a nitrogen atmosphere at 850 °C for 3 hours until the carbon atoms contained in the polycarbosilane were carbonized, to obtain a composite material B1. The composition of the amorphous material phase in the composite material B1 was measured by TEM-EDX, which was $SiO_xC_z$, where x = 0.32 and z = 1.62. The content ratio of the nanoparticles (active phase) in the composite material B1 was approximately 45 mass%.

Formula (B1):

[Chem. 1]

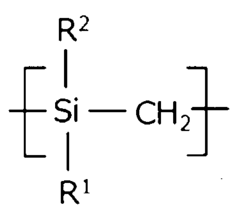

<<Comparative Example 2>>

As the material constituting the active phase, silicon nanoparticles having an average particle size of 40 nm were prepared. The nanoparticles was added in an amount of 100 parts by mass, relative to 220 parts by mass of polysiloxane (represented by a formula (B2) below, where R1 and R2 are -H group and $-CH=CH_2$ group, respectively, and liquid at room temperature) as an organosilicon polymer, and mixed until a uniform slurry was attained, to obtain a mixture. The resultant mixture was fired in a nitrogen atmosphere at 850 °C for 3 hours until the carbon atoms contained in the polysiloxane were carbonized, to obtain a composite material B2. The composition of the amorphous material phase in the composite material B2 was measured by TEM-EDX, which was $SiO_xC_z$, where x = 0.82 and z = 1.21. The content ratio of the nanoparticles (active phase) in the composite material B2 was approximately 45 mass%.

Formula (B2):

[Chem. 2]

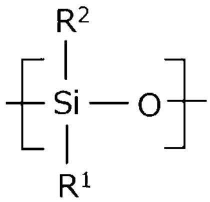

[Evaluation 2]

Using each of the negative electrode materials of Comparative Examples 1 and 2, a test cell was produced in the same manner as in [Evaluation 1], with respect to which charging and discharging were performed, to determine a utilization rate of Si contained in each of the composite materials B1 and B2. The evaluation results are shown in Table 1.
Table 1 shows that the utilization rate of Si of the composite material A1 was extremely high.

[Industrial Applicability]

The negative electrode material for secondary batteries according to the present disclosure is useful for a secondary battery used as a main power source for mobile communication devices, portable electronic devices, etc.
Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: electrode group, 2: positive electrode lead, 3: negative electrode lead, 4: battery case, 5: sealing plate, 6: negative electrode terminal, 7: gasket, 8: sealing plug

**Claims**

**1.** A negative electrode material for secondary batteries, comprising:

a composite material, the composite material containing an active phase that is reactive with Li, and an amorphous material phase, wherein
the active phase is dispersed in the amorphous material phase, and has a particle diameter of 10 nm or less,
the amorphous material phase contains elements A, O, and C, and
the element A is at least one selected from the group consisting of Si, Sn, Ti, Al, and Mg.

**2.** The negative electrode material for secondary batteries according to claim 1, wherein the particle diameter is 5 nm or less.

**3.** The negative electrode material for secondary batteries according to claim 1, wherein a spectrum obtained by X-ray diffractometry of the composite material has no peak attributable to the active phase.

**4.** The negative electrode material for secondary batteries according to claim 1, wherein in a cross section of the composite material, the amorphous material phase has substantially no grain boundaries.

**5.** The negative electrode material for secondary batteries according to claim 1, wherein

the amorphous material phase is represented by a general formula: $M_aAO_xN_yC_z$,
the general formula satisfies

$$0 < a \leq 4,$$

$$0 < x \leq 3,$$

$$0 \leq y \leq 1,$$

and

$$0 \leq 1-0.5x-0.75y \leq z,$$

and
the element M is at least one selected from the group consisting of Li, Na, K, Mg, Ca, B, and Al.

**6.** The negative electrode material for secondary batteries according to claim 1, wherein the element A includes at least Si.

**7.** The negative electrode material for secondary batteries according to claim 5, wherein the element M includes at least Li.

**8.** The negative electrode material for secondary batteries according to claim 1, wherein voids are present within the amorphous material phase.

**9.** The negative electrode material for secondary batteries according to claim 1, further comprising:

a conductive layer covering a surface of the composite material, wherein
the conductive layer contains carbon.

**10.** The negative electrode material for secondary batteries according to claim 1, wherein a material constituting the active phase includes at least one selected from the group consisting of a metal phase and an intermetallic compound phase.

**11.** The negative electrode material for secondary batteries according to claim 9, wherein

the metal phase is at least one selected from the group consisting of a Si phase, a Sn phase, a Ti phase, an Al phase, and a Mg phase, and
the intermetallic compound phase is at least one selected from the group consisting of a $CrSi_2$ phase, a $MnSi_2$ phase, an $FeSi_2$ phase, a $CoSi_2$ phase, a $NiSi_2$ phase, and a LiNiSn phase.

**12.** The negative electrode material for secondary batteries according to claim 10, wherein the metal phase further includes at least one selected from the group consisting of Li, Na, K, Mg, Ca, B, and Al.

**13.** The negative electrode material for secondary batteries according to claim 1, wherein a content ratio of the active phase in the composite material is 50 mass% or less.

**14.** The negative electrode material for secondary batteries according to claim 1, wherein a content ratio of the active phase in the composite material is 40 mass% or less.

**15.** The negative electrode material for secondary batteries according to claim 1, wherein at least one selected from the group consisting of graphite, hard carbon, and soft carbon is further dispersed in the amorphous material phase.

**16.** A secondary battery, comprising:

a positive electrode; a negative electrode; and an electrolyte, wherein
the negative electrode includes the negative electrode material for secondary batteries according to claim 1.

**17.** A method for producing a negative electrode material for secondary batteries, the method comprising:

a first step of reducing an organometallic compound, to obtain an intermediate containing an active phase having a median diameter measured by dynamic light scattering spectroscopy of 10 nm or less; and
a second step of firing the intermediate, to obtain a composite material containing an amorphous material phase and the active phase dispersed in the amorphous material phase, wherein
the organometallic compound and the amorphous material phase contain elements A, O, and C, and the element A is at least one selected from the group consisting of Si, Sn, Ti, Al, and Mg.

**18.** The method for producing a negative electrode material for secondary batteries according to claim 17, further comprising a step of granulating the intermediate, before firing the intermediate.

**19.** The method for producing a negative electrode material for secondary batteries according to claim 17, further comprising:

a step of mixing the intermediate with a polymer, before firing the intermediate, wherein
the polymer is carbonized in the second step.

**20.** The method for producing a negative electrode material for secondary batteries according to claim 17, wherein the organometallic compound is a silane coupling agent.

**21.** The method for producing a negative electrode material for secondary batteries according to claim 20, wherein the silane coupling agent is at least one selected from the group consisting of 3-aminopropyltrimethoxysilane and 3-aminopropyltriethoxysilane.

*FIG. 1*

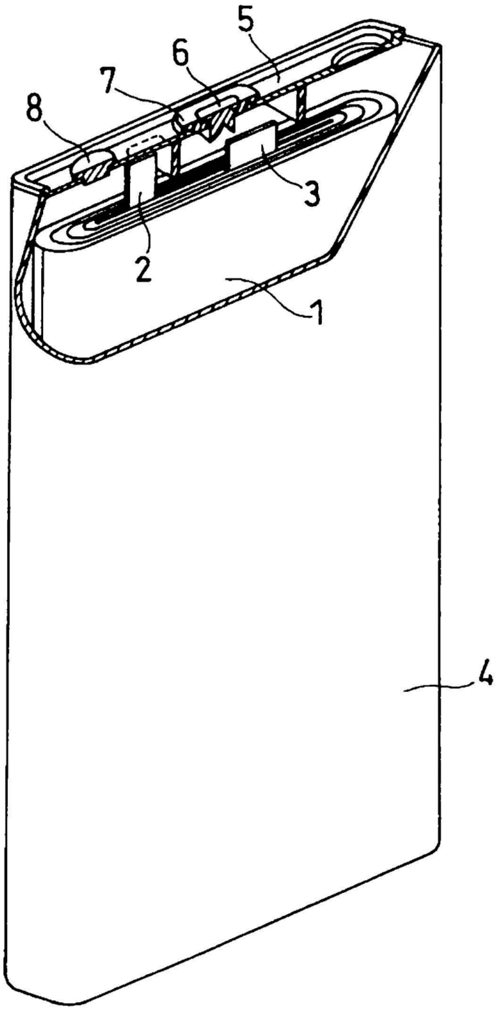

*FIG. 2*

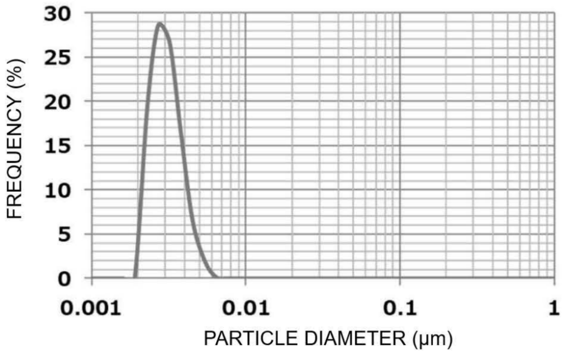


*FIG. 3A*

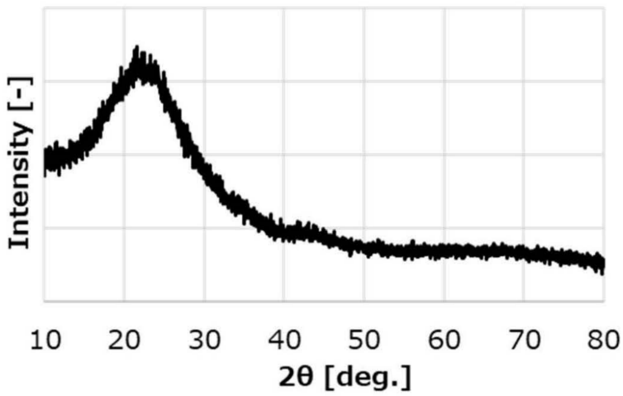


*FIG. 3B*

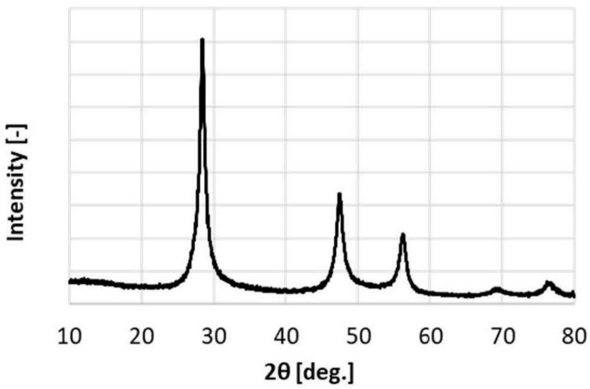


*FIG. 4*

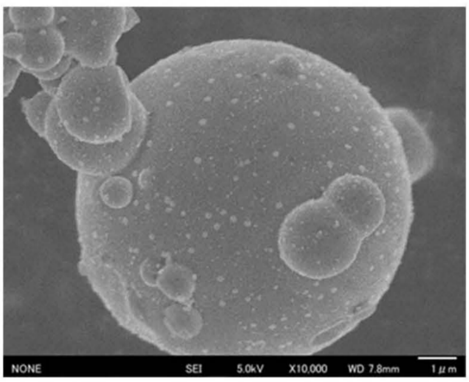

FIG. 5

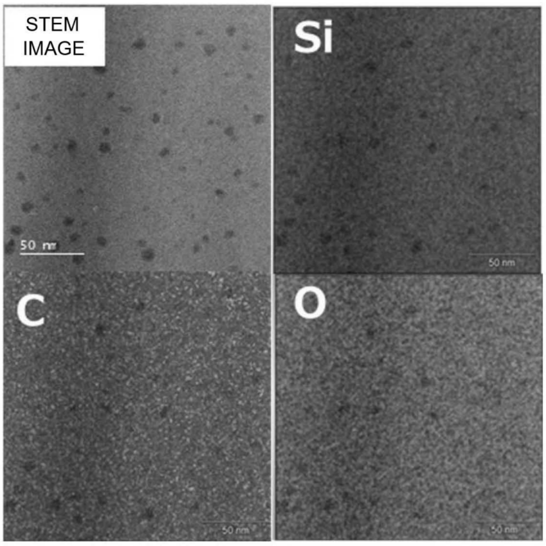


FIG. 6

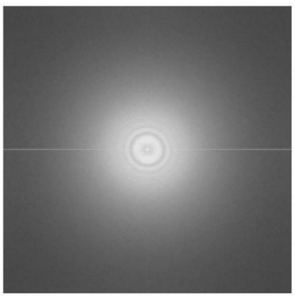

# INTERNATIONAL SEARCH REPORT

International application No. **PCT/JP2024/013127**

**A. CLASSIFICATION OF SUBJECT MATTER**

***H01M 4/36***(2006.01)i; ***C01B 33/113***(2006.01)i; ***C01F 5/02***(2006.01)i; ***C01F 7/02***(2022.01)i; ***C01G 19/02***(2006.01)i; ***C01G 23/04***(2006.01)i; ***H01M 4/1391***(2010.01)i; ***H01M 4/38***(2006.01)i; ***H01M 4/485***(2010.01)i; ***H01M 4/62***(2006.01)i

FI: H01M4/36 B; C01B33/113 Z; C01F5/02; C01F7/02; C01G19/02 Z; C01G23/04 Z; H01M4/1391; H01M4/38 Z; H01M4/485; H01M4/62 Z

According to International Patent Classification (IPC) or to both national classification and IPC

**B. FIELDS SEARCHED**

Minimum documentation searched (classification system followed by classification symbols)

H01M4/00-4/62; H01M10/05-10/0587; H01M10/36-10/39; C01B33/00-33/193; C01F5/00-7/788; C01G19/00-19/18; C01G23/00-23/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/210512 A1 (PANASONIC INTELLECTUAL PROPERTY MANAGEMENT CO., LTD.) 06 October 2022 (2022-10-06)<br>paragraphs [0014]-[0083] | 1-16 |
| A | WO 2023/017694 A1 (DIC CORPORATION) 16 February 2023 (2023-02-16)<br>entire text, all drawings | 1-21 |
| A | WO 2021/157459 A1 (DIC CORPORATION) 12 August 2021 (2021-08-12)<br>entire text, all drawings | 1-21 |
| A | WO 2022/009572 A1 (DIC CORPORATION) 13 January 2022 (2022-01-13)<br>entire text, all drawings | 1-21 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 May 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/013127**

| Patent document cited in search report | Publication date (day/month/year) | Patent family member(s) | Publication date (day/month/year) |
|---|---|---|---|
| WO 2022/210512 A1 | 06 October 2022 | EP 4317064 A1<br>paragraphs [0015]-[0084]<br>CN 117157777 A | |
| WO 2023/017694 A1 | 16 February 2023 | WO 2023/017587 A1 | |
| WO 2021/157459 A1 | 12 August 2021 | US 2022/0384783 A1<br>entire text, all drawings<br>EP 4102597 A1<br>CN 114902448 A<br>KR 10-2022-0139298 A | |
| WO 2022/009572 A1 | 13 January 2022 | US 2023/0125241 A1<br>entire text, all drawings<br>EP 4181233 A1<br>CN 115668544 A<br>KR 10-2023-0030569 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023072353 A
- JP 2007115548 A
- WO 2022210512 A